# EUROPEAN PATENT APPLICATION

(11) **EP 3 481 062 A1**
(43) Date of publication of application: **08.05.2019**
(21) Application number: 17819249.8
(22) Date of filing: 27.06.2017
(51) Int. Cl.: H04N 13/20

(54) **PROJECTION UNIT AND PHOTOGRAPHING APPARATUS COMPRISING SAME PROJECTION UNIT, PROCESSOR, AND IMAGING DEVICE**

(30) Priority: 29.06.2016 CN 201610509224
(71) Applicant: Robotics Robotics Limited, NT, Hong Kong (CN)
(72) Inventor: CHEN, Senmiao, NT Hong Kong (CN)
(74) Representative: Cabinet Laurent & Charras
(86) International application number: PCT/CN2017/090394
(87) International publication number: WO 2018/001252

(57) **Abstract**

Provided in the present invention is a project unit, which is used for projecting an image to a target area containing a target object, said image having a certain gradual change rule and being unique in a certain spatial range. Also provided are a corresponding photographing apparatus, an imaging device, and a processor. The technical solution used by the present invention uses the projection unit to project, to the target area, an image which has a certain gradual rule and which is unique in a certain spatial range, and a target object which projects such an image is photographed by means of a certain unit, thus avoiding repeated photographing and obtaining multiple images, and by means of combining relevant characteristics of the image, the accuracy of follow-up point cloud generation on a back-end processor is improved, while achieving good real-time performances.

## Description

### TECHNICAL FIELD

The present disclosure relates to a field of imaging technology, and particularly relates to a projection unit and a photographing device including the same, a processor, and imaging apparatus.

### BACKGROUND

In the process of three-dimensional imaging of an object, firstly it is necessary to capture a two-dimensional image of the object through the imaging unit, and then form a three-dimensional image of the object through a related algorithm. The method of two-dimensional image acquisition directly affects the subsequent operations and the accuracy of the final three-dimensional imaging.

At present, the prior art generally generates a discrete spot at the target area by projecting a discrete spot to the target area (i.e., by emitting a discrete beam to the target area), the discrete spot is unique in a certain area, so as to capture image of the target object covering the discrete spot and the target area, then the image is matched according to the uniqueness of the discrete spot in a certain spatial range. However, the problem is that the discrete light is not continuous in the space, the final matching result according to the matching method of the discrete spot obtained from the back-end processor doesn't achieve a high (sub-pixel) accuracy.

Or according to the patent US 13/907426 applied by Microsoft, a plurality of successive phase shifting fringe images with spots are required to be projected, although the imaging accuracy is improved, since a plurality of images are required to be captured simultaneously, on the one hand, the speed is relatively slow, a poor real-time performance is provided, and on the other hand, point cloud imaging accuracy for moving objects is not enough.

### SUMMARY

In order to solve the above problems, the present disclosure provides a projection unit and a photographing apparatus including the unit, a processor, and an imaging apparatus. An image with a certain gradual change rule and uniqueness within a certain spatial range is projected by the projection unit, and the accuracy of generating a point cloud in the back-end processor is improved by combining the relevant characteristics of the image improves, also a better real-time performance is achieved.

According to a first aspect of the present disclosure, a projection unit is provided. The projection unit is configured to projecting an image to a target area containing a target object, and the image has a certain gradual change rule and is unique within a certain spatial range.

According to a second aspect of the present disclosure, a photographing device is provided, including: at least one projection unit and at least one camera unit.

The projection unit is configured to projecting an image to a target area containing a target object, and the image has a certain gradual change rule and is unique within a certain spatial range.

The camera unit is configured to acquire at least one image containing at least the target object after the projection unit projecting the image.

According to a third aspect of the present disclosure, an imaging apparatus is provided. The apparatus includes the aforementioned three-dimensional imaging photographing device.

According to a fourth aspect of the present disclosure, a processor for an imaging apparatus including at least one first matching unit is provided. The first matching unit comprises at least a first calculating unit and a second calculating unit.

The first calculating unit is configured to match a first image and a second image.

The second calculating unit is configured to achieve higher precision matching of the first image and the second image using a certain gradual change rule of the matched first and second images.

According to a fifth aspect of the present disclosure, a processor for an imaging apparatus is provided. The processor includes a storage unit, at least one second matching unit, and the second matching unit comprises at least a fourth calculating unit and a fifth calculating unit.

The storage unit is configured to acquire and store a plurality of images of target area in advance as reference images.

The fourth calculating unit is configured to match the acquired image containing at least the target object with the plurality of the reference images stored in advance.

The fifth calculating unit is configured to achieve higher precision matching of the image containing the target object and the reference images using the certain gradual change rule of the image containing the target object and the reference images.

As can be seen from the above, the embodiments of the present disclosure employs a projection unit and a photographing device including same projection unit, a processor, and an imaging apparatus. The following technical effects have been achieved:
1. Since the present disclosure projects an image having a certain gradual change rule and a uniqueness in a certain spatial range by the projection unit, the target object that projects such an image is captured by the camera unit, thereby avoiding repeated shooting of multiple images. Combining the relevant characteristics of this image improves the accuracy of subsequent generation of point clouds in the back-end processor, and provides a better real-time performance.
2. Since the present disclosure projects an image having a certain gradual change rule and a uniqueness in a certain spatial range by the projection unit, the projected image that at least contains the target object is photographed by the camera unit. Combining the relevant characteristics of this image improves the accuracy of subsequent generation of point clouds in the back-end processor, and provides a better real-time performance.
3. Since the reflection surface of the target object will have a greater impact on the scanning result during the photographing process, once the surface of the object is reflective, the three-dimensional point cloud image of the reflecting area cannot be obtained. Therefore, polarizing units are provided on the projection unit and the camera unit, respectively. By the cooperative engagement of the two polarizing units, the brightness of the reflective surface can be greatly reduced, so that the reflective surface of the target object can also be captured in an image.
4. Since the camera unit of the photographing device further includes at least an adjusting unit, or the back-end of the 3-dimensional imaging apparatus further includes at least an adjusting unit, the tolerance to the brightness of the camera unit of the captured image is increased.
5. Since the image of the sine wave-like with linear change is employed, the light intensity varies linearly, so the difference of pixels values between two adjacent pixels at the peak and trough positions will not be too small.
6. Since the projection unit includes a laser emitting module and a diffraction sheet located in front of the laser emitting module, or a MEMS module, comparing with a projector, a scanning range of a larger depth of field and a lower cost can be achieved.
7. Since the processor includes a flat field correction unit, the brightness of the image captured by the camera unit is closer to the real situation, which improves the accuracy of picture matching.

### BRIEF DESCRIPTION OF THE DRAWINGS

To illustrate the technical solutions according to the embodiments of the present disclosure or in the prior art more clearly, the accompanying drawings for describing the embodiments or the prior art are introduced briefly in the following. Apparently, the accompanying drawings in the following description are only some embodiments of the present disclosure, and persons of ordinary skill in the art can derive other drawings from the accompanying drawings without creative efforts.
FIG. 1 is a schematic block diagram of a photographing device according to an embodiment of the present disclosure.
FIG. 2 is a schematic block diagram of yet another photographing device according to an embodiment of the present disclosure.
FIG. 3 is a schematic block diagram of yet another photographing device according to an embodiment of the present disclosure.
FIG. 4 is a schematic block diagram of yet another photographing device according to an embodiment of the present disclosure.
FIG. 5 is a schematic block diagram of an imaging apparatus according to an embodiment of the present disclosure.
FIG. 6 is a schematic block diagram of yet another imaging apparatus according to an embodiment of the present disclosure.
FIG. 7 is a schematic block diagram of yet another imaging apparatus according to an embodiment of the present disclosure.
FIG. 8 is a flow chart of a photographing method according to an embodiment of the present disclosure.
FIG. 9 is a schematic diagram showing the difference between the projected image according to the embodiment of the present invention and discrete spots of the prior art, wherein the upper part is discrete spots, and the lower part is a projected image provided by the embodiment of the present disclosure.
FIG. 10 is a schematic diagram showing a continuous approximate sine wave of an overall light intensity of a projected image having a certain gradual change rule according to an embodiment of the present disclosure.
FIG. 11 is a partial flow chart of an imaging method according to an embodiment of the present disclosure.
FIG. 12 is a partial flow chart of another imaging method according to an embodiment of the present disclosure.
FIG. 13 is a partial flow chart of another imaging method according to an embodiment of the present disclosure.
FIG. 14 is a partial flow chart of another imaging method according to an embodiment of the present disclosure.
FIG. 15 is a schematic block diagram of yet another imaging apparatus according to an embodiment of the present disclosure.
FIG. 16 is a schematic block diagram of still another imaging apparatus according to an embodiment of the present disclosure.

### DETAILED DESCRIPTION OF THE EMBODIMENTS

The embodiments of the present disclosure provide a projection unit and a photographing device including the unit, a processor, and an imaging apparatus. An image with a certain gradual change rule and uniqueness within a certain spatial range is projected by the projection unit, and the accuracy of generating a point cloud in the back-end processor is improved by combining the relevant characteristics of the image improves, also a better real-time performance is achieved.

The technical solutions of the present disclosure will be clearly and completely described in the following with reference to the accompanying drawings. It is obvious that the embodiments to be described are only a part rather than all of the embodiments of the present disclosure. All other embodiments obtained by persons skilled in the art based on the embodiments of the present disclosure without creative efforts shall fall within the protection scope of the present disclosure.

### Embodiment 1

In the process of three-dimensional imaging of an object, firstly it is necessary to capture a two-dimensional image of the object through the imaging unit, and then form a three-dimensional image of the object through a related algorithm. The method of two-dimensional image acquisition directly affects the subsequent operations of the following three-dimensional imaging and the accuracy of the final three-dimensional imaging.

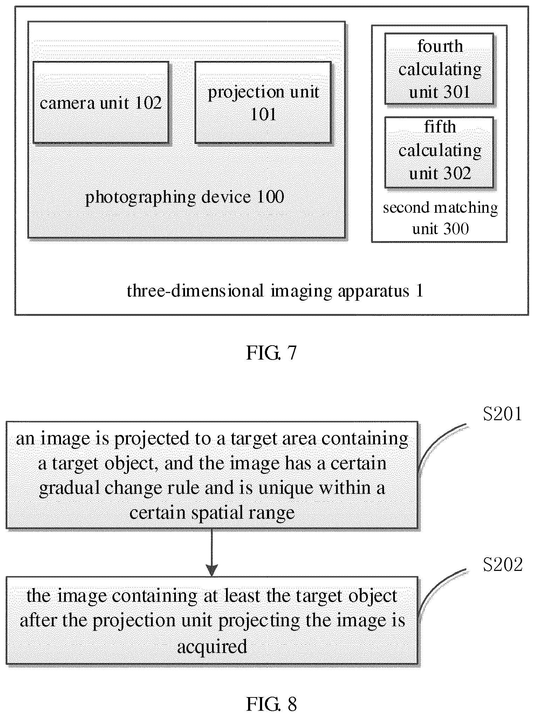

At present, the prior art generally generates a discrete spot at the target area by projecting a discrete spot to the target area (i.e., by emitting a discrete beam to the target area, for example, emitting a laser beam, as shown in the upper part of FIG. 8), so as to generate the discrete spot on the target area. The image of the target object covering the discrete spot and the target area is captured, then the image is matched according to the discrete spot. However, the problem is that the discrete intensity is not continuous in the space, the final matching result cannot achieve a high accuracy (for example, a sub-pixel accuracy). Therefore, the final matching result obtained from the back-end processor cannot achieve a high (sub-pixel) accuracy. Or according to the patent US13/907426 applied by Microsoft, a plurality of successive phase shifting fringe images with spots are required to be projected, although the imaging accuracy is improved, since a plurality of images are required to be captured simultaneously, on the one hand, the speed is relatively slow, a poor real-time performance is provided, and on the other hand, point cloud imaging accuracy for moving objects is not enough.

In order to solve the above problems, the present disclosure provides a photographing device, so as to photograph the target object in the target area.

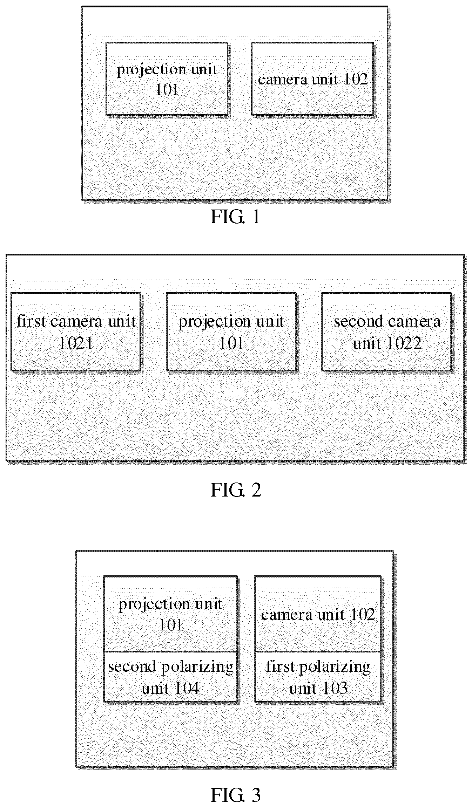

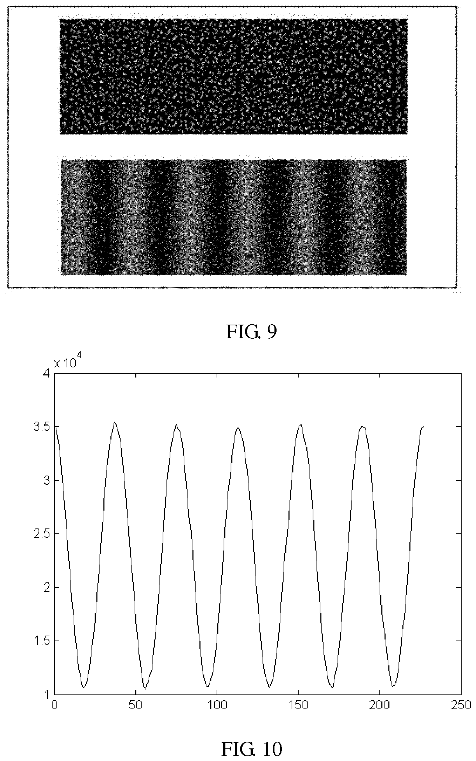

FIG. 1 is a schematic block diagram of a photographing device according to an embodiment of the present disclosure. FIG. 9 is a schematic diagram showing the difference between the projected image according to the embodiment of the present invention and discrete spots of the prior art, wherein the upper part is discrete spots, and the lower part is a projected image provided by the embodiment of the present invention. FIG. 10 is a schematic diagram showing a continuous approximate sine shape of an overall light intensity of a projected image having a certain gradual change rule according to an embodiment of the present disclosure.

As shown in FIG. 1, the apparatus 100 includes at least one projection unit 101 and at least one camera unit 102.

The projection unit 101 is used to project an image to a target area containing a target object, and the image has a certain gradual change rule and is unique within a certain spatial range.

The projected image is an image. The image needs to include the target object. If the image cannot include the entire target object due to the limitation of the photographing range, it may be necessary to capture multiple images and then splice the images in a subsequent processor to form an entire image. The splicing technology of the back-end processor belongs to the prior art and will not be described here.

Since the image has a certain gradual change rule and is unique within a certain spatial range, the intensity of this image that has the certain gradual change rule and is unique within a certain spatial range the integrally forms a continuous sine wave.

The sine wave does not necessarily have to be a standard sine wave, and may be an approximate sine wave. As shown in Figure 10, for example, a sine wave that is not completely regular, or a sine wave that changes linearly (also called as a triangle wave). The advantage of using a linearly varying sine wave is that the difference in pixel values between adjacent pixels is small near the peak and trough positions of a sine wave, in the subsequent processor matching, a higher accuracy might not be achieved due to the too small difference in pixel values between adjacent pixels. If a sine wave that changes linearly is applied, since the intensity changes linearly, the difference of pixels between two adjacent pixels at the peak and trough positions will not be too small, thereby improving the accuracy of the subsequent matching.

According to the projection unit of the present disclosure, since the present disclosure projects an image having a certain gradual change rule and a uniqueness in a certain spatial range by the projection unit, the target object that projects such an image is photographed by the camera unit, thereby avoiding repeated shooting of multiple images. Combining the relevant characteristics of this image improves the accuracy of subsequent generation of point clouds in the back-end processor, and provides a better real-time performance.

The target object is placed at the target area, so as to ensure that the edges of the target object are all located within the target area. This ensures that the image can cover the target object when the image is projected onto the target area.

The camera unit 102 is used to acquire at least one image containing at least the target object after the projection unit projecting the image.

After the projection unit projects the image to the target area, the target area and the target object located in the target area are covered with the image. Thus the image containing at least the target object obtained by the camera unit is an image covering the target object.

Obtaining the image covering the target object by the camera unit means that the obtained image can contain only the target object, or may also contain target area other than the target object.

According to the photographing device of the present disclosure, since the present disclosure projects an image having a certain gradual change rule and a uniqueness in a certain spatial range by the projection unit, the projected image that at least contains the target object is photographed by the camera unit. Combining the relevant characteristics of this image improves the accuracy of subsequent generation of point clouds in the back-end processor, and provides a better real-time performance.

It should be noted that, further, the gradual change may include repeated gradations of light and dark (as shown in the lower diagram of FIG. 9), and the light and dark phases may be in various directions, such as in a horizontal, vertical, or oblique gradient arrangement.

In a certain spatial range means that, a fixed-size frame can be preset (the size of the frame can be arbitrarily set as needed), so as to ensure that no matter how the frame moves on the image, the image in each frame is always unique. Specifically, the image can include a plurality of points of different sizes, a circle shape, a triangle shape, a plurality of irregular patterns, or a two-dimensional code, etc. As long as the image is unique in a certain spatial range, it belongs to the scope of protection of the present disclosure.

In some embodiments, the projection unit may employ one projection unit, two projection units, three projection units, or more as needed.

The projection unit is preferably a projector, and an image to be projected is designed in advance as needed, and then projected to the target area and the target object by the projector.

In addition to the projector, projection unit can further includes a laser emitting module and a diffraction sheet located in front of the laser emitting module, or a micro laser projection (MEMS) module.

The working principle of the laser emitting module and the diffraction sheet located in front of the laser emitting module is that, a diffraction sheet with a specific structure is produced, and the diffraction phenomenon of the laser light is used to form a predetermined diffraction pattern after passing through the diffraction sheet, which has the advantages of large depth of field and low cost.

The structure of the MEMS module mainly includes a laser emitting device and a mirror chip. The working principle is that, the laser emitting device generates a beam, and the beam is scanned by the mirror chip to generate an image, and the module has the advantages of large depth of field.

The camera unit may employ one camera unit, two camera units, three camera units, or more according to the needs of the method used by the subsequent processor to process the image. However, no matter how many camera units are used, the camera unit is within the scope of the present disclosure.

To understand the technical solutions of the present disclosure, the illustrated embodiments are taking one camera unit and two camera units as examples to be described, respectively. The imaging methods with one camera unit and two camera units will be further described in details in Embodiment 2.

The structure with one camera unit is shown in FIG. 1, and is not described again herein.

The embodiment with two camera units is further described in detail as an example.

As shown in FIG. 1 and FIG. 2, FIG. 2 is a schematic block diagram of another photographing device according to an embodiment of the present disclosure.

For a better understanding, the example with two camera units is described in details. The camera unit 102 of the image photographing device 100 includes: a first camera unit 1021 and a second camera unit 1022.

The first camera unit 102 and the second camera unit 103 are used to obtain a first two-dimensional image and a second two-dimensional image, respectively.

The corresponding relationship between the first camera unit 102 and the second camera unit 103 is identified, and the obtained first and second two-dimensional images are sent to the back-end processor, depth data are calculated according to the corresponding relationship, and a three-dimensional point cloud image of the target object is illustrated. The imaging method and procedure will be further described in Embodiment 2.

It should be noted that the position between the first and second camera devices and the projection unit can be arbitrarily arranged as needed, and FIG. 2 only shows one of the preferred arrangements of the positions.

Each of the camera units may be any one or a combination of a black and white camera, a color camera, an infrared camera, and the like.

In addition to the first camera unit 1021 and the second camera unit 1022, the camera unit 102 can increase the number of camera units. For example, the first and second camera units are black and white cameras, and a color camera can be added; or the number of camera units can be simply increased, such as a plurality of camera units surrounding the target object, which have same imaging principles as the imaging principles of the two camera units, and are not repeated herein.

As shown in FIG. 3, FIG. 3 is a schematic block diagram of a three-dimensional photographing device according to an embodiment of the present disclosure.

In some preferred embodiments, the apparatus further includes at least a first polarizing unit 103 and a second polarizing unit 104.

The first polarizing unit 103 and the second polarizing unit 104 are located on the camera unit 102 and the projection unit 101, respectively.

Since the reflection surface of the target object will have a greater impact on the scanning result during the photographing, once the surface of the object is reflective, the three-dimensional point cloud image of the reflecting area is affected to some extent. Therefore, polarizing units are provided on the projection unit and the camera unit, respectively. By the cooperative engagement of the two polarizing units, the brightness of the reflective surface can be greatly reduced, so that the reflective surface of the target object can also capture a better image.

Specifically, the polarizing unit may include a polarizing film, a polarizer, or the like.

In the detailed embodiment, the polarizing unit is preferably a linear polarizing film, which will be described in details below.

In some of the preferred embodiments, it is preferred that the first polarizing unit on the projection unit and the second polarizing unit of the camera unit are arranged at 90 degrees to each other. By this arrangement, the incident light with a same polarization direction with the polarization direction of the reflected light can be eliminated, such that the reflected light is reduced to a certain extent.

It should be noted that, the number of the polarizing units varies according to the number of the camera units and the projection unit. When the camera units includes two camera units as described in the above embodiment, the apparatus may include three polarizing units.

In addition to the first and the second camera units, if the camera units include other camera units, the number of the polarizing units can also be increased, so as to match with the additional camera units.

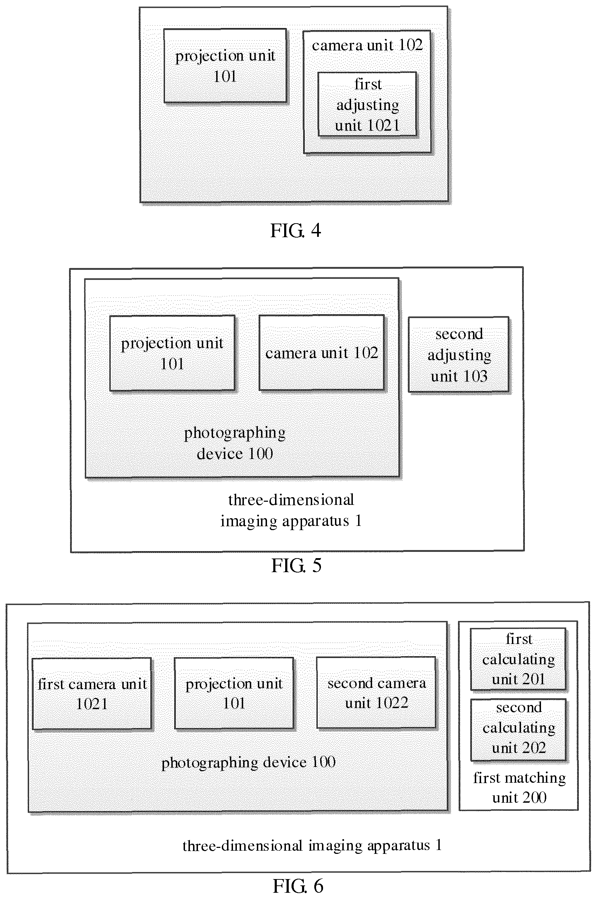

As shown in FIG. 4, FIG. 4 is a schematic block diagram of a photographing device according to another embodiment of the present disclosure.

In some of the embodiments, the camera unit further includes at least one first adjusting unit 1021 used to increase a tolerance to the brightness of the camera unit.

The first adjusting unit may be located in the camera unit such that the captured image itself has a wider range of the tolerance to the brightness. The first adjusting unit 1021 includes, but is not limited to, a dual sensitivity (DUAL-ISO) or a high dynamic range image (HDR) unit, and the above unit can enable the camera unit to better handle the occurrence of dark objects together with bright objects. The DUAL-ISO and HDR units are of prior art and will not be described here. In addition to this, the adjusting unit may be provided in the imaging apparatus, which will be further described in the Embodiment 2.

The aforementioned photographing device can be applied to a three-dimensional imaging apparatus, but it should be noted that, the photographing device is not limited to a certain application in a three-dimensional imaging apparatus, and any imaging apparatus to which the photographing device can be applied is within the scope of protection of the present disclosure.

### Embodiment 2

FIG. 10 is a schematic diagram showing a continuous approximate sine wave of an overall light intensity of a projected image according to an embodiment of the present disclosure.

The present disclosure also provides an imaging apparatus (not shown), and the device includes at least one photographing device of the embodiment 1. The following is a description of the three-dimensional imaging apparatus as an example. It should be noted that, the photographing device is not limited to a certain application in a three-dimensional imaging apparatus, and any imaging apparatus to which the photographing device can be applied is within the scope of protection of the present invention.

The three-dimensional imaging apparatus includes a photographing device at the front-end and an image processor at the back-end, and the image photographing device at the front-end sends the photographed image to the back-end processor, and the back-end processor achieves the three-dimensional imaging by a corresponding method according to the image data sent by the front-end photographing device.

The method adopted by the processor differs according to the number of camera units included in the camera unit. Even if the number of camera units is the same, the three-dimensional imaging can be achieved by different methods in the processor. Generally, the imaging method with one camera unit differs with the imaging method with two or more camera units. Hereinafter, the imaging apparatus will be described in detail by taking one camera unit and two imaging units as examples, respectively.

In the detailed embodiment, the structure and working process of the three-dimensional imaging apparatus is substantially described with an example of the aforementioned camera unit with two camera units. For the description of the structure of the imaging apparatus, since other components in the device are not the inventive aspects of the present disclosure, the structure of some parts is only simply described.

The three-dimensional imaging apparatus includes an image photographing device at the front-end and an image processor at the back-end, and the image photographing device at the front-end sends the photographed image to the back-end processor, and a matching unit of the back-end processor matches a first image and a second image according to the data of the first image and the second image sent by the front-end image photographing device. According to the matched images, a calculating unit illustrate a point cloud image of the three-dimensional object using a triangulation algorithm. The working process of the other parts of the three-dimensional imaging apparatus is further described in details below:

Before the aforementioned photographing device captures an image, the two camera units need to be calibrated in advance, that is, by arranging a calibration plate in the target area, the processor includes a calibration calculation unit, and the image of calibration plate in the target area is captured by the camera unit at the front-end. The image is sent to the calibration calculation unit of the back-end processor, thereby performing global calibration of the intrinsic and extrinsic parameters of the camera unit. The calibration belongs to the prior art and will not be described herein.

FIG. 6 is a schematic block diagram of another imaging apparatus according to an embodiment of the present disclosure. FIG. 9 is a schematic diagram showing a continuous approximate sine wave of an overall light intensity of a projected image according to an embodiment of the present disclosure.

As shown in FIG. 6, in addition to the photographing device, the imaging apparatus further includes a first matching unit located in the processor, and the first matching unit includes a first calculating unit and a second calculating unit.

The first calculating unit is used to match the first image and the second image.

Specifically, a method of block-match may be used. The specific matching process is as follows:
In the process of capturing an image by the image photographing device, a preset pattern is projected by an image projection device projects to an object to be scanned, two images with different field of views are captured by the first camera unit and the second camera unit of the image photographing device, respectively, and the images are sent to the back-end processor. Generally, the hardware and software settings of the first and the second camera units are identical except for the position information, thus the pixel brightness values of the first and the second images at the overlapping portion of these images are highly approximate. When calculating a corresponding relationship between the pixel points of these two images, generally a fix-sized frame is set with its center being a pixel point to be matched, and the block match is achieved in the frame. An n^{∗}n image block from the first image is compared with N image blocks with the same size from the second image along a direction of a polar line of the two camera units (N is a searching range of the parallax between the two images). The method of comparing is that, absolute values of the difference of brightness of the pixel points corresponding to two image blocks are calculated, then the absolute values are summed to obtain a matching score. Therefore, N matching scores can be obtained, a minimum value from the N matching scores can be found, and the pixel points from the second image corresponding to the minimum value are corresponding to the pixel points from the matched first image, and normally the accuracy of the corresponding relationship is plus or minus 0.5 pixels.

The second calculating unit is used to achieve higher precision matching of the first image and the second image using a certain gradual change rule of the matched first and second images.

Since the projected image continuously changes in brightness, generally, the first and the second images also continuously change in brightness, and this feature can be utilized to improve the accuracy of the matching relationship. One of the possible methods is as follows: a matching point A from the first image and a pixel point B from the second image that matches with the point A are found according to the method in the above paragraph, then the brightness values of each pixels from the frame corresponding to the point A are summed up to obtain an overall brightness value AL, similarly, the overall brightness value BL1 of the frame corresponding to the point B, and the overall brightness value BL2, BL3 of the left and right frames are also calculated. Generally, BL1, BL2, and BL3 have a nearly linear monotonic change relationship (as shown in FIG. 10, the continuous change is close to a sine wave change relationship), and the AL is will fall between BL1 and BL2, or between BL2 and BL3. Finally, AL, BL1, BL2 or AL, BL2, BL3 can be used for linear interpolation to calculate the sub-pixel matching relationship.

Additionally, the imaging apparatus further includes a third computing unit (not shown) used to obtain a three-dimensional point cloud image of the target object by related calculation method from the matched result of the images.

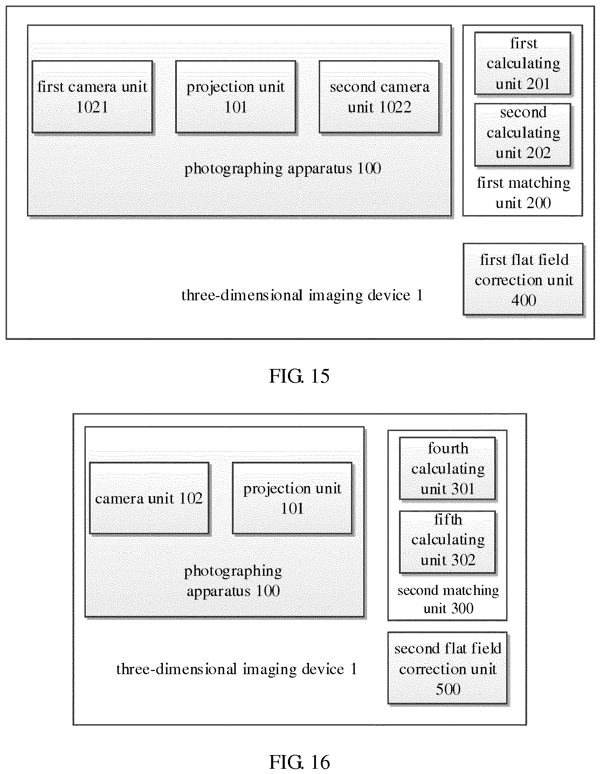

FIG. 15 is a schematic block diagram of still another imaging apparatus according to an embodiment of the present disclosure.

As shown in FIG. 15, in some preferred embodiments, the processor further includes a first flat field correction unit 400. The first flat field correction unit flat field corrects the first and the second images sent by the front-end camera unit 102, such that the brightness of the images captured by the camera unit 102 is closer to the real situation, then the flat field corrected images are sent to the first matching unit 200, thereby improving the accuracy of subsequent picture matching.

FIG. 7 is a schematic block diagram of still another imaging apparatus according to an embodiment of the present disclosure.

As shown in FIG. 7, the imaging apparatus includes a camera unit, and the imaging apparatus further includes:

A storage unit, which is used to acquire and store a plurality of images of target area in advance as reference images.

Before the target object is placed on the target area, a plurality of images of target area are acquired in advance as reference images. One possible method may be as follows: a flat plate (this is the target area) is parallelly placed before the camera unit, and the distance from the plate is a minimum working distance of a three-dimensional scanning device, then an image as described in the Embodiment 1 is projected by a projection unit to the flat plate, a reference image is captured and a distance corresponding to this reference image is recorded. Then the flat plat is equidistantly moved away from the camera (moving distance of each time is s), and several images (K images) are captures and the corresponding distances are recorded, and the image captured from the farthest distance is corresponding to the maximum wording distance of the three-dimensional scanning system.

Additionally, the apparatus further includes a second matching unit located in the processor, and the second matching unit at least comprises a fourth calculating unit and a fifth calculating unit.

The fourth calculating unit is configured to match the acquired image containing at least the target object with the plurality of reference images stored in advance.

After acquiring the image containing the target object, the photographing device sends the image to the back-end processor through the communication port of the processor, the third computing unit of the back-end processor will first perform block matching of pixels by block-matching the captured image with a series of reference images stored in advance. Specifically, the method is as follows: When calculating a corresponding relationship between the pixel points of these two images, generally a fix-sized frame is set with its center being a pixel point to be matched, and the block match is achieved in the frame. An n^{∗}n image block from the first image is compared with N image blocks with the same size from the second image along a direction (horizontal direction of the image) of a polar line of the two camera units (N is a searching range calculated according to the translation distance s, the larger s is, the larger N is). The method of comparing is that, brightness values of the two image blocks are normalized, respectively, then absolute values of the difference of brightness of the pixel points corresponding to two image blocks are calculated, then the absolute values are summed to obtain a matching score. Therefore, N matching scores can be obtained, and similar matchings are made with all reference images, then K^{∗}N matching scores are obtained, and a minimum value is found among the K^{∗}N scores, then it is possible to know which pixel point in the reference image (assuming the Mth image) corresponds to the target pixel point, and normally the accuracy of the corresponding relationship is plus or minus 0.5 pixels.

The fifth calculating unit is configured to achieve higher precision matching of the image containing the target object and the reference images using the certain gradual change rule of the image containing the target object and the reference images.

Since the projected image continuously changes in brightness, generally, the target and the reference images also continuously change in brightness, and this feature can be utilized to improve the accuracy of the matching relationship. One of the possible methods is as follows: a matching point A from the first image and a pixel point B from the Mth reference image that matches with the point A are found according to the method in the above paragraph, then two larger frame (e.g. (n+2)^{∗}(n+2)) are set on the target image and the Mth reference image with these two pixel points acting as centers, respectively. Then the brightness values of these two frames are normalized, such that the brightness values of these two frames are highly approximate. Then the brightness values of each pixels from the n^{∗}n frame corresponding to the point A are summed up to obtain an overall brightness value AL, similarly, the overall brightness value BL1 of the n^{∗}n frame corresponding to the point B, and the overall brightness value BL2, BL3 of the left and right n^{∗}n frames are also calculated. Generally, BL1, BL2, and BL3 have a nearly linear monotonic change relationship (as shown in FIG. 8, the continuous change is close to a sine wave change relationship), and the AL is will fall between BL1 and BL2, or between BL2 and BL3. Finally, AL, BL1, BL2 or AL, BL2, BL3 can be used for linear interpolation to calculate the sub-pixel matching relationship.

Additionally, the imaging apparatus further includes a sixth computing unit (not shown) used to obtain a three-dimensional point cloud image of the target object from the matched result of the images by a related calculation method.

As shown in FIG. 5, FIG. 5 is a schematic block diagram of an imaging apparatus according to an embodiment of the present disclosure.

In some of the embodiments, the apparatus 1 further includes at least one second adjusting unit 103 used to increase a tolerance to the brightness of the camera unit.

The above-described method can be achieved by taking a plurality of photographs with different exposure values at the time of taking a photograph or by imaging with a plurality of exposure values in a same photograph.

The second adjusting unit may be located in the camera unit such that the captured image itself has a wider range of the tolerance to the brightness. It can also be located in the three-dimensional imaging apparatus, for example in the storage unit. Specifically, a technical program of the adjusting unit stored in advance in the storage unit may be called by the processor, and then the matched images may be processed. Thus, it is possible to better deal with the case where dark objects occur together with bright objects. Or the program of the DUAL-ISO or HDR technology is pre-written into a software program or burned into a hardware.

The adjusting unit includes, but is not limited to, a dual sensitivity (DUAL-ISO) or a high dynamic range image (HDR) unit, and the above unit can enable the camera unit to better handle the occurrence of dark objects together with bright objects. The DUAL-ISO and HDR units are of prior art and will not be described here.

The first adjusting unit and the second adjusting unit may be alternatively selected, or be both located on a same imaging apparatus. I.e., in addition to providing a first adjusting unit in the camera unit, the second adjusting unit may also be located in the apparatus, thereby increasing the tolerance in a wider range.

FIG. 16 is a schematic block diagram of still another imaging apparatus according to an embodiment of the present disclosure.

As shown in FIG. 16, in some preferred embodiments, the processor further includes a second flat field correction unit 500. The second flat field correction unit 500 flat field corrects the first and the second images sent by the front-end camera unit 102, such that the brightness of the images captured by the camera unit 102 is closer to the real situation, then the flat field corrected images are sent to the second matching unit 300, thereby improving the accuracy of subsequent picture matching.

For the photographing device, please refer to the specific description of the embodiment 1, and will not be repeated here.

### Embodiment 3

As shown in FIG. 8, FIG. 8 is a flow chart of a photographing method according to an embodiment of the present disclosure.

In order to solve the aforementioned problems, the embodiments of the present disclosure also provide a three-dimensional photographing method of a photographing device of the Embodiment 1, which includes:
Step S201, an image is projected to a target area containing a target object, and the image has a certain gradual change rule and is unique within a certain spatial range.
Step S202, an image containing at least the target object after the projection unit projecting the image is acquired.

In some embodiments, the method further includes: reducing a brightness of a light reflecting surface on the target area captured by the camera unit via a polarizing unit.

For a detailed description of the device or the components and related details in the method, refer to the Embodiment 1, and details are not described herein again.

In some of the embodiments, the method further includes: increasing a tolerance to the brightness of the camera unit.

The aforementioned photographing method can be applied to a three-dimensional imaging method, but it should be noted that, the photographing method is not limited to a certain application in a three-dimensional imaging method, and any imaging method to which the photographing method can be applied is within the scope of protection of the present disclosure.

### Embodiment 4

The embodiment 4 is an imaging method containing the photographing method of Embodiment 3.

The present disclosure also provides an imaging method (not shown), and the method includes at least the photographing method of the Embodiment 3. The following is a description of the three-dimensional imaging method as an example. It should be noted that, the photographing method is not limited to a certain application in a three-dimensional imaging method, and any imaging method to which the photographing method can be applied is within the scope of protection of the present invention.

The image photographing device at the front-end sends the photographed image to the back-end processor, and the back-end processor achieves the three-dimensional imaging by a corresponding method according to the image data sent by the front-end photographing device.

The method adopted by the processor differs according to the number of camera units. Even if the number of camera units is the same, the three-dimensional imaging can be achieved by different methods in the processor.

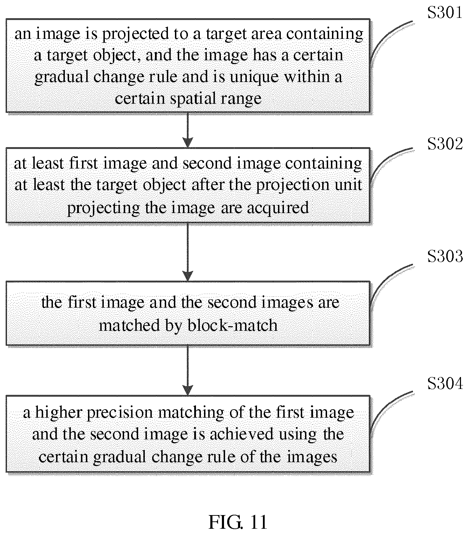

FIG. 11 is a partial flow chart of an imaging method according to an embodiment of the present disclosure.

As shown in FIG. 11, two camera units will be described below as an example. The two camera units obtain two images, which need to be matched, and then illustrate a corresponding three-dimensional point cloud image for the matching results. The method and steps are described in detail below.

Step S301, an image is projected to a target area containing a target object, and the image has a certain gradual change rule and is unique within a certain spatial range.

Step S302, at least first image and second image containing at least the target object after the projection unit projecting the image are acquired.

In the process of capturing an image by the image photographing device, a preset pattern is projected by an image projection device projects to an object to be scanned, two images with different field of views are captured by the first camera unit and the second camera unit of the image photographing device, respectively, and the images are sent to the back-end processor.

After the above steps, the step of matching the first and second images by the back-end processor is included, and the method for image matching includes the following steps:
Step S303, the first image and the second images are matched.
Step S304, a higher precision matching of the first image and the second image is achieved using the certain gradual change rule of the first and second images.

For a detailed description of the related steps of the foregoing matching method, refer to the detailed description in the first calculating unit and the second calculating unit in the second embodiment, and details are not repeatedly described herein.

Finally, after the aforementioned matching, the imaging method further includes: Step S305, a three-dimensional point cloud image (not shown) of the target object is obtained by related calculation method from the matched result of the images.

Specifically, the three-dimensional point cloud image can be obtained by a triangulation method. The method of triangulation belongs to the prior art, and details are not described herein again.

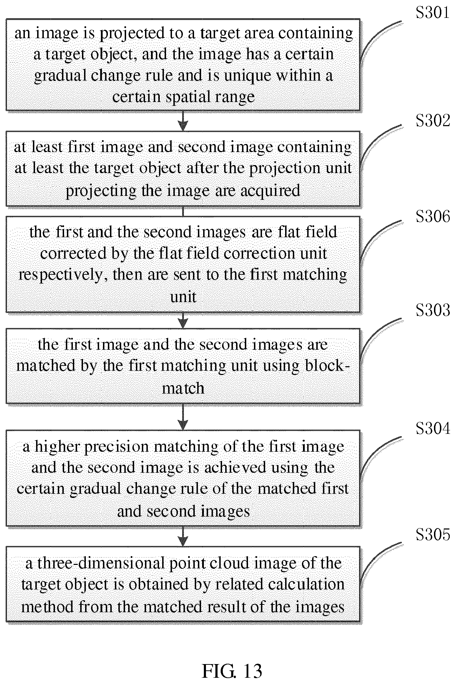

As shown in FIG. 13, in some preferred embodiments, the method further includes Step S306: the first and the second images sent by the front-end camera unit are flat field corrected by the flat field correction unit respectively, then are sent to the first matching unit to process matching.

Since the images are flat field corrected before matching, the brightness of the images captured by the camera unit is closer to the real situation, which improves the accuracy of picture matching.

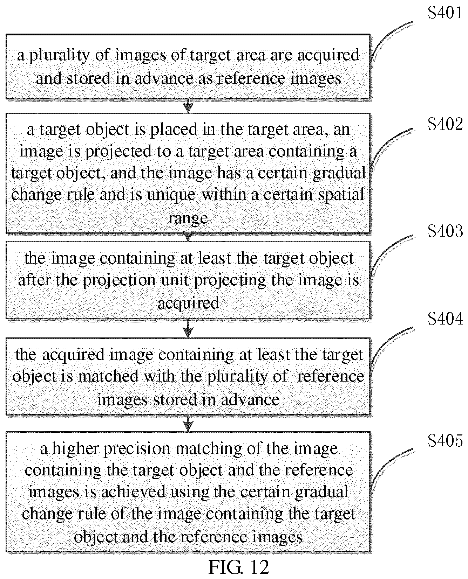

As shown in FIG. 12, one camera unit will be described below as an example. The method applying one camera unit includes:
Step S401, a plurality of images of target area are acquired and stored in advance as reference images.
Step S402, a target object is placed in the target area, an image is projected to a target area containing the target object, and the image has a certain gradual change rule and is unique within a certain spatial range.
Step S403, the image containing at least the target object after the projection unit projecting the image is acquired.

After the above steps, the step of matching the stored reference images and the image containing at least the target object by the back-end processor is included, and the method for image matching includes the following steps:

Step S404, the acquired image containing at least the target object is matched with the plurality of reference images stored in advance.

Step S405, a higher precision matching of the image containing the target object and the reference images is achieved using the certain gradual change rule of the image containing at least the target object and the reference images.

Finally, after the aforementioned method of matching, the imaging method further includes: Step S406, a three-dimensional point cloud image (not shown) of the target object is obtained by related calculation method from the matched result of the images.

In some of the embodiments, the method further includes: increasing a tolerance to the brightness of the image captured by the camera unit.

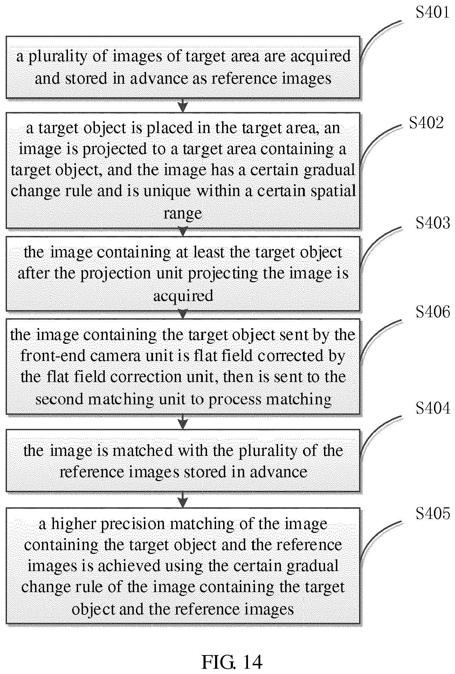

As shown in FIG. 14, in some preferred embodiments, the method further includes Step S406: the image containing the target object sent by the front-end camera unit is flat field corrected by the second flat field correction unit, then is sent to the second matching unit to process matching.

Since the image is flat field corrected before matching, the brightness of the image captured by the camera unit is closer to the real situation, which improves the accuracy of picture matching.

The image photographing method and other related descriptions are described in the Embodiments 1, 2, and 3, and are not described in detail herein. The method of triangulation of the back-end processor belongs to the prior art, and details are not described herein again.

It should be noted that, the aforementioned method embodiments are described as a series of action combinations for the sake of simplicity of description, but those skilled in the art will appreciate that the present invention is not limited by the sequence of described actions, since certain steps may be performed in other sequences or simultaneously in accordance with the present disclosure.

Secondly, those skilled in the art should also understand that the embodiments described in the specification are all preferred embodiments, and the actions and modules involved are not necessarily required by the present disclosure.

In the aforementioned embodiments, the descriptions of the various embodiments are different, and the parts that are not described in detail in a certain embodiment can be referred to the related descriptions of other embodiments.

It should be noted that, those skilled in the art should also understand that the embodiments described in the specification are all preferred embodiments, and the actions and modules involved are not necessarily required by the present disclosure.

The photographing method and the three-dimensional imaging method, apparatus and device provided by the embodiments of the present disclosure are described in detail above, but the description of the above embodiments is only for helping to understand the method and the core idea of the present invention, and should not be understood as limitations of the present disclosure. Rather, various modifications may be made in the details within the scope and range of equivalents of the claims and without departing from the present disclosure.

## Claims

1. A projection unit for projecting an image to a target area containing a target object,
wherein the image has a certain gradual change rule and is unique within a certain spatial range.

2. The projection unit according to claim 1, wherein the certain gradual change rule of the image comprises an intensity of the image integrally forms a continuous sine wave, an irregular of sine wave, or a linearly varying sine wave.

3. The projection unit according to claim 1, wherein the projection unit comprises a projector, a laser emitting module and a diffraction sheet located in front of the laser emitting module, or a MEMS module.

4. A photographing device, comprising at least one projection unit and at least one camera unit;
wherein the projection unit is configured to projecting an image to a target area containing a target object, and the image has a certain gradual change rule and is unique within a certain spatial range; and
the camera unit is configured to acquire at least one image containing at least the target object after the projection unit projecting the image.

5. The device according to claim 5, further comprising at least one first polarizing unit and at least one second polarizing unit;
wherein the first polarizing unit is located on the projection unit;
the second polarizing unit is located on the camera unit; and
the first polarizing unit and the second polarizing unit cooperate to reduce a brightness of a reflective surface of the target object captured by the camera unit.

6. The device according to claim 5 or 6, wherein the camera unit comprises at least one first adjusting unit configured to increase a tolerance to the brightness of the camera unit.

7. The photographing device according to claim 5 or 6, wherein the certain gradual change rule of the image comprises an intensity of the image integrally forms a continuous sine wave, an irregular of sine wave, or a linearly varying sine wave.

8. The photographing device to claim 5 or 6, wherein the projection unit comprises a projector, a laser emitting module and a diffraction sheet located in front of the laser emitting module, or a MEMS module.

9. An imaging apparatus, comprising a photographing device according to any one of claims 4 to 8.

10. The imaging apparatus according to claim 9, wherein when the camera unit comprises at least a first camera unit and a second camera unit, the imaging apparatus further comprises at least one first matching unit, the first matching unit comprises at least a first calculating unit and a second calculating unit;
the first calculating unit is configured to match the first image and a second image;
the second calculating unit is configured to achieve higher precision matching of the first image and the second images using a certain gradual change rule of the matched first and second images.

11. The imaging apparatus according to claim 10, further comprising at least one first flat field correction unit configured to flat field correct the first image and the second images sent by the first camera unit and the second camera unit, and send the flat field corrected first and second images to the first matching unit.

12. The imaging apparatus according to claim 9, wherein when the camera unit comprises a camera unit, the imaging apparatus further comprises a storage unit, at least one second matching unit, and the second matching unit comprises at least a fourth calculating unit and a fifth calculating unit;
the storage unit is configured to acquire and store a plurality of images of the target area in advance as reference images;
the fourth calculating unit is configured to match the acquired image containing at least the target object with the plurality of reference images stored in advance; and the fifth calculating unit is configured to achieve higher precision matching of the image containing the target object and the reference images using the certain gradual change rule of the image containing the target object and the reference images.

13. The imaging apparatus according to claim 12, further comprising at least one second flat field correction unit configured to flat field correct the image sent by the camera unit, and send the flat field corrected image to the second matching unit.

14. The device according to any of claims 9 to 13, wherein the apparatus further comprises at least one second adjusting unit configured to increase a tolerance to the brightness of the camera unit.

15. A processor for an imaging apparatus, comprising at least one first matching unit, and the first matching unit comprises at least a first calculating unit and a second calculating unit;
the first calculating unit is configured to match a first image and a second image; and
the second calculating unit is configured to achieve higher precision matching of the first image and the second image using a certain gradual change rule of the matched first and second images.

16. A processor for a imaging apparatus, an device according to claim 4, wherein the processor comprises a storage unit, at least one second matching unit, and the second matching unit at least comprises a fourth calculating unit and a fifth calculating unit; the storage unit is configured to acquire and store a plurality of images of target area in advance as reference images;
the fourth calculating unit is configured to match the acquired image containing at least the target object with a plurality of the stored reference images; and
the fifth calculating unit is configured to achieve higher precision matching of the image containing at least the target object and the reference images using a certain gradual change rule of the image containing at least the target object and the reference images.
